# FASCICULE DE BREVET EUROPEEN

(11) **EP 2 874 836 B1**
(45) Date de publication et mention de la délivrance du brevet: **11.09.2019**
(21) Numéro de dépôt: 13767102.0
(22) Date de dépôt: 17.07.2013
(51) Int. Cl.: B60H 1/00, B60H 1/32

(54) **ENSEMBLE COMPORTANT UN GÉNÉRATEUR ET DES MOTEURS ÉLECTRIQUES, POUR UN SYSTÈME DE CLIMATISATION OU DE RÉFRIGÉRATION DE VÉHICULE**
ANORDNUNG AUS EINEM GENERATOR UND ELEKTROMOTOREN FÜR EINE FAHRZEUGKÄLTE- ODER KLIMAANLAGE
ASSEMBLY COMPRISING A GENERATOR AND ELECTRIC MOTORS, FOR A VEHICLE COOLING OR AIR-CONDITIONING SYSTEM

(30) Priorité: 19.07.2012 FR 1257008
(43) Date de publication de la demande: 27.05.2015
(73) Titulaire: Moteurs Leroy-Somer, 16000 Angouleme (FR)
(72) Inventeur: GIRAUD, Régis, F-16000 Angouleme (FR); DEDIEU, Stéphane, F-16000 Angouleme (FR)
(74) Mandataire: Nony
(86) Numéro de dépôt international: PCT/IB2013/055886
(87) Numéro de publication internationale: WO 2014/013458

(56) Documents cités:
- EP-A2- 1 829 721
- US-A- 3 034 035
- US-A1- 2006 250 107
- US-A1- 2008 083 238
- US-A1- 2009 314 019
- US-A1- 2010 000 241

## Description

La présente invention concerne la production d'électricité à partir d'un ensemble comportant un moteur thermique et un dispositif de production d'électricité pour l'alimentation d'un ou plusieurs moteurs électriques.

US 2009/314019 a pour objet un système de réfrigération intégré dans un véhicule de transport, incluant des compresseurs mécaniquement reliés à un moteur par un système poulie-courroie qui entraîne également un générateur électrique par un système poulie-courroie. Ce générateur permet d'alimenter les moteurs des ventilateurs du condenseur et de l'évaporateur du système de réfrigération. Lorsque le moteur est à l'arrêt, un moteur d'appoint peut prendre le relai.

Il existe un besoin pour simplifier et faciliter l'entraînement du système de réfrigération ou de climatisation et réduire le coût du dispositif de production d'électricité.

L'invention vise notamment à répondre à ce besoin et a ainsi pour objet un ensemble tel que défini dans la revendication 1.

La présence d'au moins un onduleur en amont des moteurs électriques permet leur fonctionnement malgré une vitesse variable du moteur thermique, au moins dans certaines conditions de vitesse, par exemple sur une certaine plage.

Ainsi, on passe dans l'invention par un bus continu pour alimenter l'onduleur qui fournit à partir du courant continu un courant alternatif pour l'alimentation des moteurs électriques.

Le ou les moteurs électriques peuvent servir chacun à l'entraînement d'un ventilateur et être des moteurs de condenseur et/ou d'évaporateur. L'absence de tout entraînement mécanique du ou des ventilateurs de condenseur et/ou d'évaporateur, permet de régler la vitesse des ventilateurs électriques indépendamment du régime du moteur thermique.

La présence de l'onduleur permet d'améliorer l'efficacité du ou des ventilateurs en fonction de la vitesse de rotation du moteur thermique.

La présence d'un onduleur permet de faire varier la vitesse de rotation du ou des moteurs et donc par conséquence de contrôler le débit d'air et ainsi d'ajuster celui-ci en fonction des conditions d'utilisations. Cela permet entre autre d'éviter d'avoir à réguler la puissance électrique et donc d'obtenir des systèmes plus économes en énergie.

La présence de l'onduleur permet également plus de souplesse dans la conception du ou des moteurs. On peut par exemple sélectionner le nombre de pôles du moteur afin d'en optimiser la masse de matière première, par exemple un moteur à quatre pôles entrainé à 100Hz aura environ deux fois moins de matière active qu'un moteur à deux pôles alimenté à 50Hz. On peut également étendre le choix des technologies pour les moteurs et utiliser des moteurs à aimants permanents qui possèdent un meilleur rendement énergétique.

Dans un exemple de réalisation, l'ensemble comporte un onduleur disposé en amont de l'un des moteurs d'évaporateur et/ou de condenseur, de manière à permettre d'adapter la vitesse de rotation du ventilateur de l'évaporateur et/ou la vitesse de rotation du ventilateur du condenseur.

Dans un autre exemple de réalisation, l'ensemble comporte plusieurs onduleurs, en amont de chacun ou de plusieurs des moteurs de condenseur et/ou d'évaporateur. L'ensemble peut par exemple comporter un premier onduleur en amont des condenseurs, et un deuxième onduleur en amont des évaporateurs.

Dans une variante de réalisation, l'ensemble comporte en outre un régulateur de tension pour réguler la tension en sortie du générateur, qui varie avec la vitesse d'entraînement du générateur. La présence du régulateur permet le fonctionnement à vitesse variable sur une large plage de vitesse. La présence du régulateur peut ainsi permettre de constituer un ensemble économique énergétiquement. Le régulateur peut comporter un convertisseur AC/DC, l'onduleur jouant le rôle de convertisseur DC/AC.

Dans un exemple de réalisation, l'ensemble comporte un variateur de vitesse alimenté par le générateur et commandant la vitesse des ventilateurs des condenseurs, évaporateurs et de l'éventuel compresseur électrique.

L'ensemble peut comporter un dispositif de bascule de l'alimentation du ou des moteurs électriques permettant de passer d'une alimentation par le générateur à une alimentation par un réseau électrique externe. Dans ce cas, le ou les moteurs sont reliés au réseau par l'intermédiaire dudit au moins un onduleur et le générateur est alors isolé.

Le dispositif de bascule peut être configuré pour ne pouvoir s'enclencher qu'à l'arrêt du véhicule, ce qui permet d'éviter la pollution qui peut être induite par le fonctionnement du moteur thermique à l'arrêt. Ce dispositif de bascule peut comporter un ou plusieurs interrupteurs permettant de commander l'alimentation du ou des moteurs électriques à partir du réseau électrique externe. Le ou chaque interrupteur peut comporter un ou plusieurs composants électroniques. Le ou chaque interrupteur peut être réalisé par tout moyen adapté et par exemple à l'aide d'un ou plusieurs interrupteurs électromécaniques ou à semi-conducteurs, par exemple à contacteur(s), relais, thyristor(s), triac(s), IGBT ou transistor(s) bipolaire(s).

Le ou les moteurs peuvent fonctionner sur un réseau électrique externe tel qu'un réseau à 230V et 60Hz, ou 460 V et 60 Hz, ou encore 400 V et 50 Hz. Ainsi, ces moteurs peuvent fonctionner sur les réseaux électriques du monde entier, pouvant être adaptés quel que soit le lieu d'utilisation et les caractéristiques du réseau électrique local. La présence d'un variateur permet d'absorber les variations de tension en amont et donc d'éviter d'avoir des moteurs spécifiques pour chacune des tensions présentes de par le monde.

L'ensemble comporte un compresseur. Ce dernier peut être entraîné mécaniquement par le moteur thermique. L'entraînement peut se faire par poulie-courroie. L'ensemble peut être dépourvu d'un compresseur entraîné par un moteur électrique, en mode de fonctionnement normal de l'ensemble à tout le moins.

L'ensemble comporte un moteur électrique d'appoint pour l'entraînement du compresseur lorsque ce dernier n'est pas ou ne peut pas être entraîné par le moteur thermique. L'entraînement peut se faire également par poulie-courroie. Ce moteur électrique d'appoint peut être alimenté à partir du réseau électrique externe.

En variante ou additionnellement, l'ensemble peut comporter un compresseur électrique alimenté par le générateur. Le compresseur peut comporter un moteur électrique de compresseur et une pompe entraînée par ledit moteur, tous deux disposés dans une enceinte étanche. Autrement dit, l'ensemble peut comporter un compresseur hermétique. Le compresseur électrique peut être alimenté par le générateur à travers un onduleur et/ou un régulateur de tension et/ou un variateur de vitesse.

L'ensemble peut être dépourvu de batteries.

En variante, l'ensemble peut comporter des moyens de stockage de l'énergie, notamment une batterie. La présence d'un moyen de stockage d'énergie peut faciliter la mise en route du compresseur pendant le démarrage de l'ensemble, le compresseur pouvant être alimenté dans un premier temps par le moyen de stockage d'énergie. Cela permet de compenser un éventuel arrêt du moteur thermique et permet de démarrer le compresseur pendant le démarrage du moteur thermique. Cela peut permettre également de raccourcir la montée en régime du moteur thermique.

L'ensemble peut comporter un unique condenseur, ou en variante plusieurs condenseurs, par exemple deux condenseurs. L'ensemble peut comporter un unique évaporateur, ou en variante plusieurs évaporateurs, par exemple deux évaporateurs.

Le ou les moteurs peuvent être des moteurs asynchrones ou synchrones. Ils peuvent être triphasés. Ils peuvent être mono- ou bi-vitesse. En présence de variateur, ils sont mono-vitesse. Ils peuvent permettre de conserver des performances aérauliques proches quelle que soit la vitesse du moteur thermique. On peut ainsi limiter la puissance absorbée en cas d'augmentation de la vitesse du moteur thermique.

Le ou les moteurs sont de préférence des moteurs asynchrones, lesquels sont de construction simple et d'utilisation faible.

L'un ou au moins l'un des moteurs peut comporter un rotor à quatre pôles, ou à six pôles, ce qui permet un fonctionnement à basse vitesse avec une faible puissance consommée.

Le ou les moteurs peuvent comporter un ventilateur à chacune des extrémités libres de leur arbre.

Le moteur thermique peut être un moteur diesel. Le moteur thermique et le ou les moteurs électriques peuvent appartenir à un système de réfrigération ou de climatisation d'un véhicule. Le moteur thermique peut être différent du moteur servant à la propulsion du véhicule.

Le générateur est une machine synchrone.

Le moteur thermique peut entraîner l'arbre du générateur par un système poulie-courroie. Un tel entraînement par poulie-courroie permet l'ajustement de la fréquence de sortie du générateur à la vitesse du moteur thermique afin de permettre l'utilisation de moteurs électriques de ventilateurs utilisables sur le réseau directement sans dégradation des performances. Si le moteur thermique a une vitesse de rotation de 1600 tours par minute avec un ratio de 1,125 entre les poulies, alors le générateur, à 4 pôles par exemple, sera entraîné à une vitesse de 1800 tours par minute et délivrera une tension de sortie à 60Hz comme le réseau, grâce à sa construction synchrone qui n'induit aucun glissement.

Ainsi, le générateur peut être entraîné en rotation par le moteur thermique avec un rapport de transmission choisi de façon que la fréquence délivrée par ce générateur soit le même que celle du réseau électrique externe servant à alimenter le ou les moteurs quand le véhicule est à l'arrêt.

La fréquence délivrée par le générateur peut être liée à sa fréquence de rotation N par la formule f = p^{∗}N/2π avec p le nombre de paires de pôles et N en rad/s. Pour une structure à 4 pôles, on a f = N/π avec p = 2.

Le générateur peut être à aimants permanents. Le rotor du générateur peut comporter des aimants permanents, étant alors par exemple un rotor à concentration de flux ou à aimants enterrés.

L'invention pourra être mieux comprise à la lecture de la description détaillée qui va suivre, d'exemples de mise en oeuvre non limitatifs de celle-ci, et à l'examen du dessin annexé, sur lequel :
- les figures 1 et 2 représentent de manière schématique un ensemble, embarqué ou non, équipé d'un dispositif de production d'électricité réalisé conformément à l'invention,
- la figure 3 est une vue en perspective d'un générateur utilisable dans l'invention,
- les figures 4 et 5 sont des vues respectivement selon les flèches IV et V de la figure 3,
- la figure 6 est une section transversale, schématique et partielle, du rotor du générateur des figures 3 à 5,
- la figure 6a est une vue en perspective, schématique et partielle, du rotor d'une variante de réalisation de générateur,
- la figure 7 est une vue en perspective, schématique et partielle, d'une variante de réalisation de générateur,
- les figures 8 et 9 sont des vues en perspective, schématiques et partielles, respectivement des moteurs de condenseur et d'évaporateur conformes à l'invention,
- la figure 10 illustre la variation de la tension de sortie du générateur en Volts par rapport à la puissance fournie en Watts, et
- les figures 11 à 13 sont des vues analogues à la figure 1 de variantes de réalisation.

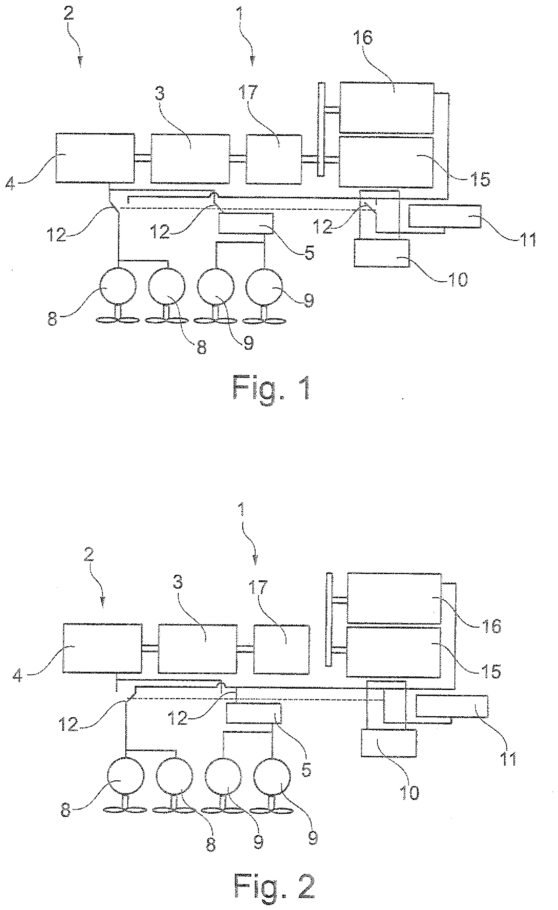

On a représenté aux figures 1 et 2 un ensemble 1 comportant d'une part un moteur thermique 3 et d'autre part un dispositif de production d'électricité 2 ayant un générateur 4 dont l'arbre peut être entraîné en rotation par le moteur thermique 3. L'ensemble 1 est par exemple embarqué sur un véhicule. Dans l'exemple décrit, le moteur thermique est un moteur diesel.

L'ensemble comporte en outre des moteurs électriques d'un système de climatisation ou de réfrigération du véhicule, alimentés par le dispositif de production d'électricité 2. Dans l'exemple décrit, l'ensemble comporte deux moteurs 8 de condenseur et deux moteurs 9 d'évaporateur.

Le dispositif de production d'électricité 2 est configuré pour que le générateur alimente les moteurs électriques 9 des évaporateurs à travers un onduleur 5, de manière à permettre leur fonctionnement à vitesse variable.

En ce qui concerne les condenseurs, ils sont alimentés directement par le générateur 4, c'est-à-dire que la tension d'alimentation des moteurs électriques 8 des condenseurs est la tension de sortie du générateur 4.

Bien entendu, on ne sort pas du cadre de la présente invention si les moteurs électriques 8 des condenseurs sont alimentés à travers un onduleur 5, tandis que les moteurs électriques 9 des évaporateurs sont alimentés directement par le générateur 4, c'est-à-dire que la tension d'alimentation des moteurs électriques 9 des évaporateurs est la tension de sortie du générateur 4.

Dans l'exemple décrit, l'ensemble comporte en outre un dispositif de bascule 10 de l'alimentation du ou des moteurs électriques des moteurs des condenseurs et des évaporateurs, permettant de passer d'une alimentation par le générateur, comme illustré à la figure 1, à une alimentation par le réseau électrique externe 11, comme illustré à la figure 2. Le dispositif de bascule 10 comporte des interrupteurs 12 permettant de commander l'alimentation des moteurs électriques à partir du réseau électrique 11.

L'ensemble comporte également un compresseur 15 entraîné par le moteur thermique 2, comme on peut le voir sur la figure 1. L'entraînement peut se faire par poulie-courroie.

L'ensemble comporte encore, comme illustré sur la figure 2, un moteur électrique d'appoint 16 pour l'entraînement du compresseur 15 lorsque ce dernier n'est pas ou ne peut pas être entraîné par le moteur thermique. L'entraînement peut se faire par poulie-courroie.

L'ensemble comporte à cet effet un dispositif d'accouplement temporaire 17 entre l'arbre du moteur thermique 3 et l'arbre du compresseur 15.

Ce moteur électrique d'appoint 16 peut être alimenté à partir du réseau électrique 11. Malgré la présence du moteur électrique d'appoint 16, l'ensemble est dépourvu d'un compresseur entraîné électriquement en mode de fonctionnement normal de l'ensemble.

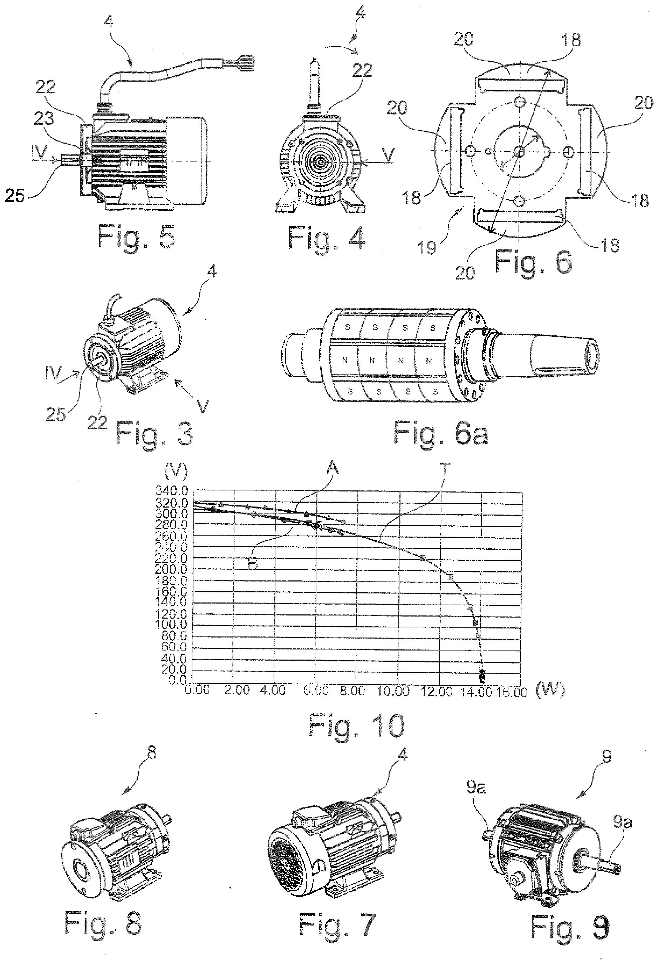

Le générateur 4 a été illustré plus en détail aux figures 3 à 6. Il peut comporter un stator bobiné avec un bobinage distribué. Le rotor peut être à aimants permanents ou bobiné. Il comporte dans l'exemple décrit un rotor 19 à aimants permanents 18 enterrés sous la surface des pôles 20, comme illustré sur la figure 6. Le rotor illustré comporte quatre pôles 20.

Le générateur comporte une bride 22 permettant le démontage d'un roulement 23 disposé à l'avant du générateur.

Par ailleurs, le moteur thermique 3 entraîne l'arbre 25 du générateur 4 par poulie-courroie, ce qui permet l'ajustement de la fréquence de sortie du générateur à la vitesse du moteur thermique. Le moteur thermique 3 peut entraîner le générateur 4 à une vitesse variable. Par exemple, lorsque la charge du générateur est faible, la vitesse de rotation du moteur thermique 3 est relativement basse et lorsque la charge du générateur 3 augmente, la vitesse du moteur thermique 3 peut être augmentée.

On a illustré à la figure 7 un exemple de réalisation dans lequel le générateur 7 comporte un stator à bobinage réparti et un rotor comportant des aimants permanents enterrés et quatre pôles. Ce générateur a par exemple une puissance de 3,5 kVA à une vitesse de fonctionnement de 1800 tours par minute.

Le générateur pourrait comporter 8 pôles sans que l'on sorte du cadre de la présente invention.

On a illustré à la figure 8 un exemple de réalisation de moteur 8 du condenseur. Le moteur 8 comporte dans cet exemple un rotor à quatre pôles.

On a illustré à la figure 9 un exemple de réalisation de moteur 9 d'évaporateur. L'évaporateur comporte par exemple un ventilateur à chacune des extrémités libres 9a de son arbre.

La figure 10 illustre la variation de la tension de sortie du générateur en Volts par rapport à la puissance fournie en Watts. La courbe T illustre les valeurs théoriques, la courbe A les valeurs obtenue avec un générateur à aimants permanents enterrés tels qu'illustré à la figure 6, et la courbe B avec un générateur à aimants permanents collés en surface, tel qu'illustré à la figure 6a.

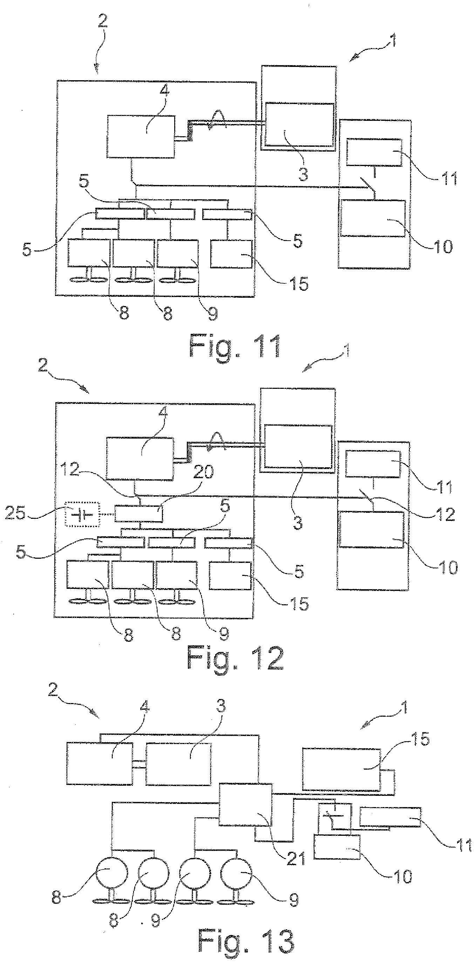

Dans ce qui précède, le compresseur 15 est, au moins en mode de fonctionnement normal de l'ensemble, entraîné par le moteur thermique 3. On ne sort pas du cadre de la présente invention s'il en est autrement, et si le compresseur est alimenté par le générateur 4. A titre d'exemple, on a illustré à la figure 11 un ensemble comportant un compresseur électrique 15 alimenté par le générateur 4, à travers un onduleur 5. Ce compresseur est dit « hermétique », c'est-à-dire qu'il comporte un moteur électrique de compresseur et une pompe entraînée par ledit moteur, tous deux disposés dans une enceinte étanche.

Dans cet exemple, l'ensemble comporte deux autres onduleurs 5, l'un en amont des moteurs 8 de condenseurs, l'autre en amont du moteur 9 d'évaporateur. Les onduleurs pourraient être regroupés en un seul onduleur ou en plusieurs onduleurs, par exemple deux onduleurs, dans un exemple non illustré.

Dans la variante de réalisation illustrée à la figure 12, l'ensemble comporte en outre un régulateur de tension 20. La présence du régulateur permet le fonctionnement à vitesse variable sur une large plage de vitesse, la tension en sortie du générateur variant avec la vitesse du générateur.

L'ensemble comporte également éventuellement une batterie 25, qui permet de faciliter la mise en route du compresseur 15 et des autres composants du système, comme le ou les évaporateurs ou condenseurs pendant le démarrage de l'ensemble, le compresseur, le ou les évaporateurs et/ou le ou les condenseurs pouvant être alimenté dans un premier temps par la batterie 25.

Dans une autre variante de réalisation illustrée à la figure 13, l'ensemble comporte un variateur de vitesse 21 alimenté par le générateur et commandant la vitesse des ventilateurs, des condenseurs et évaporateurs, et du compresseur électrique 21.

L'expression « comportant un » doit être comprise comme étant synonyme de « comportant au moins un », sauf si le contraire est spécifié.

## Revendications

1. Ensemble (1) comportant :
- un moteur thermique (3),
- un générateur (4) dont l'arbre (25) est entraîné en rotation par le moteur thermique,
- un ou plusieurs moteurs électriques (9) d'évaporateurs d'un système de climatisation ou de réfrigération de véhicule, le générateur alimentant le ou les moteurs électriques d'évaporateur à travers au moins un onduleur (5),
- un ou plusieurs moteurs électriques (8) de condenseur dudit système de climatisation ou de réfrigération, le ou lesdits moteurs comportant un rotor à quatre pôles, et le générateur alimentant directement le ou les moteurs de condenseur, la tension d'alimentation du ou des moteurs de condenseur étant la tension de sortie du générateur,
- un compresseur (15), qui est entraîné mécaniquement par le moteur thermique, et
- un moteur électrique d'appoint (16) pour l'entraînement du compresseur (15) lorsque ce dernier n'est pas entraîné par le moteur thermique.

2. Ensemble selon la revendication précédente, le moteur thermique (3) étant un moteur diesel.

3. Ensemble selon l'une quelconque des revendications précédentes, le moteur thermique (3) et le ou les moteurs électriques (8,9) appartenant à un système de réfrigération ou de climatisation d'un véhicule.

4. Ensemble selon la revendication précédente, dans lequel le ou les moteurs électriques (8,9) servent à l'entraînement d'un ventilateur.

5. Ensemble selon l'une quelconque des revendications précédentes, dans lequel le générateur (4) est à aimants permanents (18).

6. Ensemble selon l'une quelconque des revendications précédentes, comportant plusieurs onduleurs, en amont de chacun ou de plusieurs des moteurs de condenseur et/ou d'évaporateur.

7. Ensemble selon l'une quelconque des revendications précédentes, comportant un régulateur de tension pour réguler la tension en sortie du générateur.

8. Ensemble selon l'une quelconque des revendications précédentes, comportant un variateur de vitesse alimenté par le générateur et commandant la vitesse des ventilateurs des condenseurs, évaporateurs et de l'éventuel compresseur électrique.

9. Ensemble selon l'une quelconque des revendications précédentes, comportant un dispositif de bascule (10) de l'alimentation du ou des moteurs électriques (8, 9), notamment du système de climatisation ou de réfrigération, notamment des moteurs de condenseur(s) et/ou d'évaporateur(s), permettant de passer d'une alimentation par le générateur (4) à une alimentation par un réseau électrique externe (11).

10. Ensemble selon la revendication précédente, le dispositif de bascule (10) comportant un ou plusieurs interrupteurs (12) permettant de commander l'alimentation du ou des moteurs électriques à partir du réseau électrique externe (11).

11. Ensemble selon l'une quelconque des revendications précédentes, comportant un compresseur électrique (15) alimenté par le générateur (4), notamment alimenté par le générateur (4) à travers un onduleur et/ou un régulateur de tension et/ou un variateur de vitesse.

12. Ensemble selon l'une quelconque des revendications précédentes, comportant des moyens de stockage (25) de l'énergie, notamment une batterie.

13. Ensemble selon l'une quelconque des revendications précédentes, dans lequel le moteur thermique (3) entraîne l'arbre (25) du générateur (4) par poulie-courroie.

## Patentansprüche

1. Anordnung (1), welche umfasst:
- einen Verbrennungsmotor (3),
- einen Generator (4), dessen Welle (25) von dem Verbrennungsmotor drehend angetrieben wird,
- einen oder mehrere Elektromotoren (9) von Verdampfern einer Klima- oder Kälteanlage eines Fahrzeugs, wobei der Generator den oder die Elektromotoren eines Verdampfers über wenigstens einen Wechselrichter (5) speist,
- einen oder mehrere Elektromotoren (8) eines Kondensators der Klima- oder Kälteanlage, wobei der oder die Motoren einen vierpoligen Rotor aufweisen und der Generator den oder die Kondensatormotoren direkt speist, wobei die Versorgungsspannung des oder der Kondensatormotoren die Ausgangsspannung des Generators ist,
- einen Kompressor (15), welcher von dem Verbrennungsmotor mechanisch angetrieben wird, und
- einen elektrischen Hilfsmotor (16) für den Antrieb des Kompressors (15), wenn dieser Letztere nicht von dem Verbrennungsmotor angetrieben wird.

2. Anordnung nach dem vorhergehenden Anspruch, wobei der Verbrennungsmotor (3) ein Dieselmotor ist.

3. Anordnung nach einem der vorhergehenden Ansprüche, wobei der Verbrennungsmotor (3) und der oder die Elektromotoren (8, 9) zu einer Kälte- oder Klimaanlage eines Fahrzeugs gehören.

4. Anordnung nach dem vorhergehenden Anspruch, wobei der oder die Elektromotoren (8, 9) zum Antrieb eines Ventilators dienen.

5. Anordnung nach einem der vorhergehenden Ansprüche, wobei der Generator (4) ein Generator mit Permanentmagneten (18) ist.

6. Anordnung nach einem der vorhergehenden Ansprüche, welche mehrere Wechselrichter umfasst, die jedem oder mehreren der Kondensator- und/oder Verdampfermotoren vorgeschaltet sind.

7. Anordnung nach einem der vorhergehenden Ansprüche, welche einen Spannungsregler zum Regeln der Spannung am Ausgang des Generators umfasst.

8. Anordnung nach einem der vorhergehenden Ansprüche, welche einen Drehzahlregler umfasst, der von dem Generator gespeist wird und die Drehzahl der Ventilatoren der Kondensatoren, der Verdampfer und des eventuellen elektrischen Kompressors steuert.

9. Anordnung nach einem der vorhergehenden Ansprüche, welche eine Vorrichtung zur Umschaltung (10) der Speisung des oder der Elektromotoren (8, 9), insbesondere der Klima- oder Kälteanlage, insbesondere des oder der Kondensator- und/oder Verdampfermotoren, umfasst, die es ermöglicht, von einer Speisung durch den Generator (4) zu einer Speisung durch ein externes Stromnetz (11) überzugehen.

10. Anordnung nach dem vorhergehenden Anspruch, wobei die Vorrichtung zur Umschaltung (10) einen oder mehrere Schalter (12) umfasst, die es ermöglichen, die Speisung des oder der Elektromotoren von dem externen Stromnetz (11) aus zu steuern.

11. Anordnung nach einem der vorhergehenden Ansprüche, welche einen elektrischen Kompressor (15) umfasst, der von dem Generator (4) gespeist wird, insbesondere von dem Generator (4) über einen Wechselrichter und/oder einen Spannungsregler und/oder einen Drehzahlregler gespeist wird.

12. Anordnung nach einem der vorhergehenden Ansprüche, welche Speichermittel (25) für Energie umfasst, insbesondere eine Batterie.

13. Anordnung nach einem der vorhergehenden Ansprüche, wobei der Verbrennungsmotor (3) die Welle (25) des Generators (4) mittels Riemenscheibenantrieb antreibt.

## Claims

1. An assembly (1) comprising:
- an internal combustion engine (3),
- a generator (4), the shaft (25) of which is driven in rotation by the internal combustion engine,
- one or more electric motors (9) for evaporators of a vehicle cooling or air-conditioning system, the generator powering the evaporator electric motor(s) via at least one inverter (5),
- one or more electric motors (8) for the condenser of said cooling or air-conditioning system, said motor(s) comprising a four-pole rotor, the generator directly powering the condenser motor(s), the supply voltage of the condenser motor(s) being the generator output voltage,
- a compressor (15) which is driven mechanically by the internal combustion engine, and
- an auxiliary electric motor (16) for driving the compressor (15) when the latter is not driven by the internal combustion engine.

2. The assembly as claimed in the preceding claim, the internal combustion engine (3) being a diesel engine.

3. The assembly as claimed in either of the preceding claims, the internal combustion engine (3) and the electric motor(s) (8, 9) belonging to a vehicle cooling or air-conditioning system.

4. The assembly as claimed in the preceding claim, wherein the electric motor(s) (8, 9) serve to drive a fan.

5. The assembly as claimed in any of the preceding claims, wherein the generator (4) has permanent magnets (18).

6. The assembly as claimed in any of the preceding claims, comprising several inverters upstream of each or several condenser and/or evaporator motors.

7. The assembly as claimed in any of the preceding claims, comprising a voltage regulator to regulate the generator output voltage.

8. The assembly as claimed in any of the preceding claims, comprising a speed variator powered by the generator and controlling the fan speed of the condensers, evaporators and any electrical compressor.

9. The assembly as claimed in any of the preceding claims, comprising a switching device (10) for the power supply of the electric motor(s) (8, 9), in particular for the cooling or air conditioning system, in particular for the motors of the condenser(s) and/or evaporator(s), allowing switching from a supply by the generator (4) to a supply by an external electrical network (11).

10. The assembly as claimed in the preceding claim, the switching device (10) comprising one or more switches (12) allowing the supply of the electric motor(s) to be controlled from the external electrical network (11).

11. The assembly as claimed in any of the preceding claims, comprising an electrical compressor (15) powered by the generator (4), in particular powered by the generator (4) through an inverter and/or a voltage regulator and/or a speed variator.

12. The assembly as claimed in any of the preceding claims, comprising an energy storage means (25), in particular a battery.

13. The assembly as claimed in any of the preceding claims, wherein the internal combustion engine (3) drives the shaft (25) of the generator (4) by a pulley-belt system.
